(19) Europäisches Patentamt
European Patent Office
Office européen des brevets

(11) **EP 4 461 398 A1**

(12) **EUROPÄISCHE PATENTANMELDUNG**

(43) Veröffentlichungstag:
**13.11.2024 Patentblatt 2024/46**

(21) Anmeldenummer: **23172872.6**

(22) Anmeldetag: **11.05.2023**

(51) Internationale Patentklassifikation (IPC):
**B01D 39/06** (2006.01) **B01D 39/16** (2006.01)
**B01D 39/18** (2006.01) **B01D 39/20** (2006.01)
**B01D 29/00** (2006.01) **B01D 46/00** (2022.01)
**B01D 53/84** (2006.01) **C02F 1/461** (2023.01)

(52) Gemeinsame Patentklassifikation (CPC):
**B01D 39/06; B01D 39/1676; B01D 39/1692;
B01D 39/18; B01D 39/2068; B01D 46/0028;
B01D 46/30; B01D 53/85; C02F 1/46176;**
B01D 2239/0442; B01D 2239/0485;
B01D 2239/065; B01D 2239/10; B01D 2255/104;
B01D 2255/2065; (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft
80333 München (DE)**

(72) Erfinder:
• **Doye, Christian
  13156 Berlin (DE)**
• **Jensen, Jens Dahl
  14050 Berlin (DE)**
• **Krüger, Ursus
  14089 Berlin (DE)**
• **Winkler, Gabriele
  13587 Berlin (DE)**

(74) Vertreter: **Siemens Patent Attorneys
Postfach 22 16 34
80506 München (DE)**

(54) **FLUID-FILTER ZUM HEMMEN EINER VERMEHRUNG VON BIOLOGISCHEM MATERIAL, VERFAHREN ZUM HERSTELLEN DES FLUID-FILTERS, VERWENDUNG DES FLUID-FILTERS UND COMPUTER-PROGRAMM-PRODUKT ZUR SIMULATION DES FLUID-FILTERS**

(57) Die Erfindung betrifft ein Fluid-Filter zum Hemmen einer Vermehrung von biologischem Material eines Fluids, wobei das Fluid-Filter eine Partikel-Schüttung mit einer Vielzahl von Filter-Partikeln aufweist und jeder der Filter-Partikel derart ausgestaltet ist, dass er in Gegenwart von Feuchtigkeit eine galvanische Mikro-Zelle mit Mikro-Anode und mit Mikro-Kathode bildet. Zudem wird ein Verfahren zum Herstellen eines Fluid-Filters mit folgenden Herstellungs-Schritten angegeben: a) Bereitstellen einer Ausgangs-Partikel-Schüttung mit Vielzahl von Ausgangs-Partikeln der Filter-Partikel und b) Umwandeln der Ausgangs-Partikel in die Filter-Partikel, wobei jeder der Filter-Partikel derart ausgestaltet wird, dass er in Gegenwart von Feuchtigkeit eine galvanische Mikro-Zelle mit Mikro-Anode und mit Mikro-Kathode bildet.

Darüber hinaus wird eine Verwendung des Fluid-Filters zum Hemmen der Vermehrung von biologischem Material eines Fluids angegeben. Dabei werden das Fluid-Filter und das Fluid in Kontakt gebracht. Beispielsweise wird das Fluid durch die Partikel-Schüttung des Fluid-Filters geleitet. Schließlich wird ein Computer-Programm-Produkt zur Simulation des Fluid-Filters zum Hemmen einer Vermehrung von biologischem Material eines Fluids angegeben. Das Fluid-Filter bzw. eine Funktion des Fluid-Filters wird simuliert.

**(Forts. nächste Seite)**

FIG 1A

1, 10

100, 101    100, 101

4

100, 101

FIG 1B

24

21    20

2000

21

22

22    20

FIG 1C

231

232

233

234

235

20

236

10

237

238

(52) Gemeinsame Patentklassifikation (CPC): (Forts.)
B01D 2255/2073; B01D 2257/91; B01D 2258/06;
B01D 2259/4508

**Beschreibung**

Die Erfindung betrifft ein Fluid-Filter zum Hemmen einer Vermehrung von biologischem Material und ein Verfahren zum Herstellen des Fluid-Filters. Daneben werden eine Verwendung des Fluid-Filters und ein Computer-Programm-Produkt zur Simulation des Fluid-Filters angegeben.

Es ist bekannt, zum Hemmen einer Vermehrung (Anreicherung) von biologischem Material auf einer festen Oberfläche eines Gegenstandes, beispielsweise zum Hemmen der Bildung eines Biofilms auf der Oberfläche, diese mit einer Schutz-Schicht (Beschichtung) zu versehen. Eine solche Schutz-Schicht kann apathogenen (antipathogen bzw. antimikrobiell und/oder anti-viral (z.B. virozid, also Viren abtötend) wirken. Mit der apathogenen Schutz-Schicht wird das Wachstum bzw. die Vermehrung von biologischem Material in Form von Krankheits-Erregern gehemmt. Die apathogene Schutz-Schicht enthält apathogen wirkende Substanzen wie Metalle oder Metall-Verbindungen (z.B. Metalloxide). Die apathogen wirkenden Substanzen werden Farben, Lacken oder Polymerwerkstoffen zugemischt und dann durch Streichen oder Sprühen auf die Metall-Oberfläche des Metall-Objekts appliziert.

Gängige apathogen wirkende Substanzen für die Schutz-Schicht sind Kupfer bzw. Kupferverbindungen wie Cuprit (Kupferoxid), Kupferthiocyanat, Kupferpyridin oder Silber (z.B. in Form von Silber-Nanopartikeln) bzw. Silberverbindungen wie Silberchlorid, Silbernitrat, Silberoxid, Silbernatrium-Hydrogenzirconiumphosphat und Silberzeolith A. Die aus ihren Metall-Verbindungen freiwerdenden Metall-Ionen (Kupfer- oder Silber-Ionen), sowie die Silber-Nanopartikel reagieren mit schwefel- und phosphathaltigen Enzymen einer Zell-Membran (Zell-Wand) einer Zelle des biologischen Materials und stören damit eine lebensnotwendige Transportfunktion der Zell-Membran. Die Metall-Ionen werden von der Zelle aufgenommen und an schwefel- und phosphathaltige Makromoleküle gebunden (z.B. an Aminosäuren von Proteinen). Die Metall-Ionen können sich auch an eine DNA (Desoxyribonukleinsäure) oder eine RNA (Ribonukleinsäure) einer Zelle binden und damit eine Reproduktion der Zelle verhindern. Die beschriebenen Effekte führen zum Zelltod. Kupfer- und Silberverbindungen sind aber nicht nur für Mikroorganismen und/oder Viren giftig, sondern können durch die gleichen Mechanismen auch für höheren Lebewesen gefährlich werden, insbesondere dadurch, dass sie sich in der Umwelt anreichern.

Aufgabe der vorliegenden Erfindung ist es, aufzuzeigen, wie die Anreicherung von biologischem Material auch in nicht festen Medien unterdrückt werden kann, ohne die Umwelt zu gefährden.

Zur Lösung der Aufgabe wird ein Fluid-Filter zum Hemmen einer Vermehrung von biologischem Material eines Fluids angegeben, wobei das Fluid-Filter eine Partikel-Schüttung mit einer Vielzahl von Filter-Partikeln aufweist und jeder der Filter-Partikel derart ausgestaltet ist, dass er in Gegenwart von Feuchtigkeit eine galvanische Mikro-Zelle mit Mikro-Anode und mit Mikro-Kathode bildet.

Zur Lösung der Aufgabe wird auch ein Verfahren zum Herstellen eines Fluid-Filters mit folgenden Herstellungs-Schritten angegeben: a) Bereitstellen einer Ausgangs-Partikel-Schüttung mit Vielzahl von Ausgangs-Partikeln der Filter-Partikel und b) Umwandeln der Ausgangs-Partikel in die Filter-Partikel, wobei jeder der Filter-Partikel derart ausgestaltet wird, dass er in Gegenwart von Feuchtigkeit eine galvanische Mikro-Zelle mit Mikro-Anode und mit Mikro-Kathode bildet.

Darüber hinaus wird zur Lösung der Aufgabe eine Verwendung des Fluid-Filters zum Hemmen der Vermehrung von biologischem Material eines Fluids angegeben. Dabei werden das Fluid-Filter und das Fluid in Kontakt gebracht. Beispielsweise wird das Fluid durch die Partikel-Schüttung des Fluid-Filters geleitet.

Schließlich wird ein Computer-Programm-Produkt zur Simulation des Fluid-Filters zum Hemmen einer Vermehrung von biologischem Material eines Fluids angegeben. Das Fluid-Filter bzw. eine Funktion des Fluid-Filters wird simuliert. Damit ist es möglich, die Wirksamkeit des Hemmens der Vermehrung von biologischem Material durch den Fluid-Filter zu überprüfen. Das Überprüfen der Wirksamkeit kann vor einer Realisierung des Fluid-Filters stattfinden. Denkbar ist auch, dass die Überprüfung während der Nutzung des Fluid-Filters durchgeführt wird.

Da die Filter-Partikel in Anwesenheit von Feuchtigkeit galvanische Mikro-Zellen aufweisen, kommt es zur Bildung reaktiver Sauerstoff-Spezies (reaktive Sauerstoff-Verbindungen, z.B. Sauerstoff-Radikale). Die reaktiven Sauerstoff-Verbindungen greifen das biologische Material an. Dadurch wird die Vermehrung des biologischen Materials (Bakterien, Legionellen, Pilze, Schimmelsporen, Algen, Viren etc.) verhindert. Das Fluid-Filter wirkt somit anti-mikrobiell und/oder anti-viral.

Feuchtigkeit (Wasser) kann in verschiedenen Fluiden enthalten sein, z.B. in Luft (Luftfeuchtigkeit) oder in Ausdünstungen (Schweiß) und Sekreten von Lebewesen. In Anwesenheit der Feuchtigkeit bilden sich die galvanischen Mikro-Zellen (mikro-galvanische Elemente) der Filter-Partikel. So können (mikro-)elektrische Felder entstehen. An der Mikro-Kathode werden dabei mit Hilfe von im Wasser gelöstem Sauerstoff reaktive Sauerstoff-Radikale wie Hyperoxide (Superoxide) und HydroxylRadikale elektrochemisch gebildet. Nukleinbasen, die in den Nukleinsäuren DNA und RNA (Ribonukleinsäuren) enthalten und für die genetische Information verantwortlich sind, bestehen aus einem Grundgerüst heterocyclischer aromatischer Amine (Purine und Pyrimidine) mit Doppelbindungen. Die genannten Radikale weisen ungepaarte Elektronen in der äußeren Elektronenhülle auf und greifen die Doppelbindungen der aromatischen Amine an, in dem sie mit den n-Elektronen ihre äußere Elektronenhülle auffüllen, um die Edelgaskonfiguration zu erreichen. Damit geht ein Verlust des Doppelbindungssystems im Ring einher und die Nukleinbasen können ihre Information zur Proteinbiosynthese nicht mehr weitergeben. Die Replikation der Nukleinsäuren DNA und RNA wird unterbrochen.

Die gebildeten Sauerstoff-Radikale können das biologische Material auch anderweitig angreifen und somit die Vermehrung des biologischen Materials hemmen. Beispielsweise verfügt das biologische Material über proteinogene Aminosäuren mit Schwefel. Der Schwefel der Aminosäure kann durch reaktive Sauerstoff-Spezies zu einem Sulfoxid oxidiert werden. Eine Hydroxyl-Gruppe einer Seiten-Kette einer proteinogenen Aminosäure kann mit Hilfe von reaktiven Sauerstoff-Spezies zu einer Aldehyd- oder einer Carboxyl-Gruppe oxidiert werden. Es wird eine chemisch veränderte Aminosäure gebildet. Die chemisch veränderte Aminosäure kann nicht mehr am Aufbau lebensnotwendiger Proteine teilnehmen. Folglich stirbt der Mikroorganismus.

Im Ergebnis wirkt das Fluid-Filter antimikrobiell und/oder antiviral und verhindert somit die Vermehrung von biologischem Material.

Das Fluid-Filter kann zur Reinigung verschiedenster flüssiger oder gasförmiger Medien verwendet werden. Insbesondere ist das Fluid zumindest ein aus der Gruppe Luft und/oder Wasser ausgewähltes Medium. Diese Fluide werden in beliebigen Gebrauchs-Gegenständen eingesetzt, beispielsweise für WasserLeitungen oder Wasser-Behältern öffentlicher Bade-Einrichtungen (Schwimmbäder, Duschen, etc.). Vorzugsweise ist das Fluid Bestandteil zumindest eines aus der Gruppe Lüftungs-Anlage und Klima-Anlage ausgewählter Gebrauchs-Gegenstands. Gerade bei diesen Gebrauchs-Gegenständen ist es wichtig, Keim-Bildung zu verhindern. Dazu wird die Partikel-Schüttung in den Gebrauchs-Gegenstand eingebaut, der Wasser zur Leitung, zum Aufbewahren, zum Kühlen und Erwärmen enthält. Bleibt das Wasser längere Zeit in solchen Gebrauchs-Gegenständen stehen, so könnten sich an Wänden der GebrauchsGegenstände Biofilme bilden. Die Partikel-Schüttung verhindert die Bildung von Biofilmen.

In einer besonderen Ausgestaltung des Fluid-Filters weist jeder der Filter-Partikel einen Schicht-Aufbau mit einer Partikel-Schicht und mindestens einer weiteren Partikel-Schicht auf. Dabei bilden die Partikel-Schichten die Mikro-Anode oder die Mikro-Kathode der galvanischen Mikro-Zelle. Beispielsweise bildet ein Kern-Bereich des Filter-Partikels eine Partikel-Schichten. Auf diese Partikel-Schicht ist (mittelbar oder unmittelbar) die weitere Partikel-Schicht aufgebracht. Hierbei ist denkbar, dass ein Grundköper eines Filter-Partikels von einer der Partikel-Schichten gebildet ist, auf die die weitere Partikel-Schicht aufgebracht ist. Auch ist es möglich, für die Filter-Partikel partikuläre Träger-Körper aus einem anderen Träger-Material zu verwenden.

Dafür sind Träger-Materialien wie Aluminiumoxid ($Al_2O_3$), Antimonoxid ($Sb_2O_3$) Titandioxid ($TiO_2$), Zirkonoxid ($ZrO_2$), Zeolithe (kristalline Alumosilikate), Perowskit und Glimmer denkbar.

Zur Ausbildung des elektrischen Feldes weisen die Partikel-Schicht und die eitere Partikel-Schicht Schicht-Materialien mit unterschiedlichen Redoxpotentialen auf. Gemäß einer besonderen Ausgestaltung weist die Mikro-Anode ein Anoden-Material mit einem Redoxpotential von über + 0,5 V und die Mikro-Kathode ein Kathoden-Material mit einem Redoxpotential von unter - 0,5 V auf. Mit den unterschiedlichen Redoxpotentialen (Standardpotentiale) wird der Aufbau der für die Entkeimung notwendigen elektrischen Felder gesorgt. Dabei gibt es keine Einschränkung hinsichtlich der Art des Schicht-Materials.

In einer besonderen Ausgestaltung weisen das Anoden-Material und/oder das Kathoden-Material mindestens ein elementares Metall und/oder eine Metall-Verbindung auf. Das elementare Metall weist vorzugswese Silber auf. Beispielsweise ist die Anode aus Silber oder einer Silber-Legierung. Die Metall-Verbindung weist insbesondere mindestens ein Übergangsmetall auf. Vorzugsweise ist das Übergangsmetall zumindest aus der Gruppe Cer und Mangan ausgewählt.

In einer besonderen Ausgestaltung weist zumindest eine der Partikel-Schichten eine aus dem Bereich von 1 $\mu$m bis 10 $\mu$m und insbesondere aus dem Bereich von 2 $\mu$m bis 5 $\mu$m ausgewählte Schicht-Dicke auf. Größere oder kleinere Schicht-Dicken sind aber auch denkbar.

Gemäß einer Weiterbildung des Fluid-Filters ist mindestens ein Indikator zur Anzeige einer Aktivität des Fluid-Filters für das Hemmen der Vermehrung von biologischem Material vorhanden. Damit kann eine Funktions-Fähigkeit des Fluid-Filters im Betrieb des Fluid-Filters überwacht werden. Mit der Anzeige der Aktivität des Fluid-Filters kann eine Wirksamkeit des Fluid-Filters überprüft werden. Mit Hilfe der Anzeige kann entschieden werden, ob das Fluid-Filter weiter betrieben oder ausgetauscht werden muss.

Im Hinblick auf das Verfahren zum Herstellen des Fluid-Filters ist es besonders vorteilhaft, wenn Ausgangs-Partikel mit jeweils einer Ausgangs-Partikel-Oberfläche verwendet werden und zum Umwandeln der Ausgangs-Partikel in die Filter-Partikel ein Anordnen des Anoden-Materials oder des Kathoden-Materials auf der Ausgangs-Partikel-Oberfläche stattfindet, so dass der Schicht-Aufbau entsteht. Dabei können die jeweiligen Materialien direkt aufgebracht werden. Denkbar ist auch, dass Vorstufen der Materialien aufgebracht werden, die anschließend prozessiert erst die entsprechenden Materialien ergeben.

Zum Aufbringen der Materialien können beliebige Verfahren angewendet werden. Insbesondere im Zusammenhang mit kleinen Schicht-Dicken ist ein Abscheiden aus der Gasphase (z.B. CVD, chemical vapour deposition, oder PVD, physical vapour deposition) denkbar. Vorzugsweise wird zum Anordnen des Anoden-Materials oder zum Anordnen den Kathoden-Materials ein nass-chemische Abscheiden durchgeführt. Die Materialien können einfach und ohne großen Aufwand aufgebracht werden.

Im Hinblick auf die Verwendung des Fluid-Filters ist Folgendes zu unterstreichen:
Die Partikel-Schüttung kann in speziellen Behältnissen von Lüftungsanlagen, Klimaanlagen oder sonstigen Raumlufttechnischen Anlagen eingebaut werden, um die zirkulierende Luft von Keimen, wie Bakterien, Algen, Schimmelsporen Legionellen, Pilzen und Viren zu befreien. Keimfreie Luft ist besonders wichtig in der Lebensmittelindustrie, in medizinischen Einrichtungen (Kliniken, Pflegeheimen, Reha- Einrichtungen) sowie große Gebäudekomplexe im Büro- und Wohnbereich, in denen einige hundert bis 1000 Menschen arbeiten und leben, damit keimbelastete Luft nicht über die Klimatisierung und Lüftung ungehindert in einzelne Gebäudebereiche transferiert wird.

Es gibt Raumlufttechnische Anlagen ohne Lüftungsfunktion, die nur die Temperatur der Luft herunterkühlen, z.B. in der Fleisch verarbeitenden Industrie, zur Aufrechterhaltung einer bestimmten Temperatur. In diesem Fall wäre eine Partikel-Schüttung mit antimikrobiellen und viruziden Teilchen mit Funktionsüberwachung über einen Vision- Sensor mit Indikatoranzeige vom Vorteil. Außerdem können die genannten Partikel-Schüttungen auch in mobilen Luftreinigungsgeräten zum Einsatz kommen.

Für die Wasseraufbereitung können Partikel-Schüttungen mit antimikrobiell und antiviral wirkenden Filter-Partikeln in Kartuschen oder Patronen in Rohrsysteme, die Trinkwasser leiten, in Aufbewahrungsbehältern und in Apparaturen mit WasserKreisläufen eingebaut werden, um eine Anhaftung von Mikroorganismen und damit der Bildung von Biofilmen insbesondere an den Wänden der Rohre und Behälter zu verhindern. Besonders wichtig sind solche Partikel-Schüttungen in Kartuschen oder Patronen, wenn das Wasser aus irgendeinem Grund steht.

Folgende Anwendungsbeispiele sind hier zu nennen:

- Künstliche Wasserspeicher oder Wasserreservoire, in denen Regenwasser als Nutz- oder Trinkwasser für länger anhaltende trockene Perioden gesammelt wird. Beispielsweise können Rückhaltebecken und Wassertürme.

- Kaltwasserzuleitungen mit langen Stillstandzeiten oder Kaltwasserzuleitungen, die einer Wärmeeinwirkung ausgesetzt sind.

- Wasser-Totleitungen.

- Duschen, insbesondere öffentliche Duschen.

- Luftbefeuchter und Luftwäscher, die mittels Wasser über rotierende Walzen oder Platten aus der angesaugten Raumluft Schwebestoffe wie Staub, Pollen, Tabakrauch und Geruchsmoleküle entfernen. Dies ist besonders vorteilhaft, da sich in der gereinigten und feuchten Luft Viren, Bakterien (Legionellen) und Schimmelsporen anreichern können und dann als Aerosole in die Atmungsorgane gelangen können.

- Warmwassertank eines Boilers sowie dessen Auslässe und angeschlossene Wasserverteilungssysteme wie Wasserhähne und Duschköpfe. Damit kann verhindert werden, dass Viren oder Legionellen ansiedeln, wenn die Temperatur unter 70°C fällt.

- Nebelerzeuger oder Nebelbrunnen, die Wasser zu Tröpfchen oder Aerosolen zerstäuben.

- Wassertank eines Wohnmobils.

- Tanks oder Speicherräume, die bei der Warmwasserbereitung mit Hilfe von Wärmepumpen genutzt werden. Um die Bildung von Legionellen zu verhindern, sollte das Wasser für die Wasseraufbereitung möglichst auf 70°C erhitzt werden. Mit Wärmepumpen wird dies i.d.R. nicht erreicht. Durch den Einsatz der Erfindung sind weitere Maßnahmen (z.B. Einbau von Heizstäben) nicht nötig, so dass zusätzliche Kosten vermieden werden können.

- In der Medizin müssen Bildgebungsgeräte wie Computertomographen, Kernspintomographen, Röntgenanlagen kalibriert werden. Dazu setzt man so genannte Phantome ein, die mit Wasser gefüllt sind. Bei langer Aufbewahrung der Flüssigkeit in einem Phantom sollte die Flüssigkeitsqualität gleichbleiben. Die Besiedlung mit Keimen und Mikroorganismen kann durch Kartuschen vermieden werden.

- Rohrleitungen in Zügen.

Zusammenfassend sind mit der Erfindung folgende wichtigen Vorteile verbunden:

- Mit dem Fluid-Filter mit der Partikel-Schüttung kann die Verkeimung von Fluiden wirksam unterbunden werden.

- Durch das Fluid-Filter wird kein Material (z.B. Ionen oder Nanoteilchen) an die Umwelt abgeben.

- Die Materialien der Partikel-Schüttung werden selbst nicht verbraucht.

- Mit der Erfindung können zusätzliche Kosten vermieden werden.

Anhand von Ausführungsbeispielen und der dazugehörigen Figuren wird die Erfindung näher beschrieben. Die Figuren sind schematisch und stellen keine maßstabsgetreue Abbildung dar.

Figur 1A zeigt im Querschnitt einen Ausschnitt einer Partikel-Schüttung des Fluid-Filters.

Figuren 1B und 1C zeigen im Querschnitt Verwendungsmöglichkeiten des Fluid-Filters.

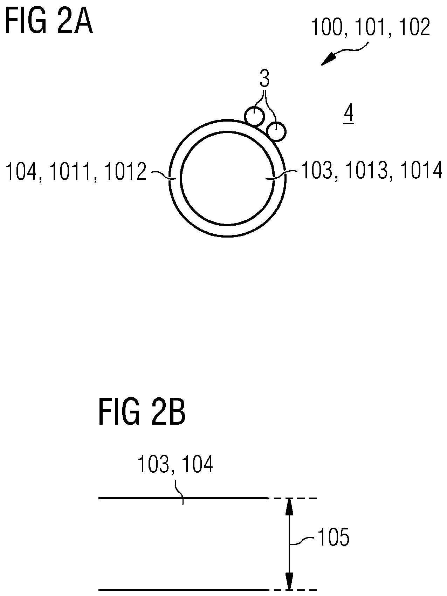

Figur 2A und 2B zeigen im Querschnitt Ausschnitte eines Filter-Partikels.

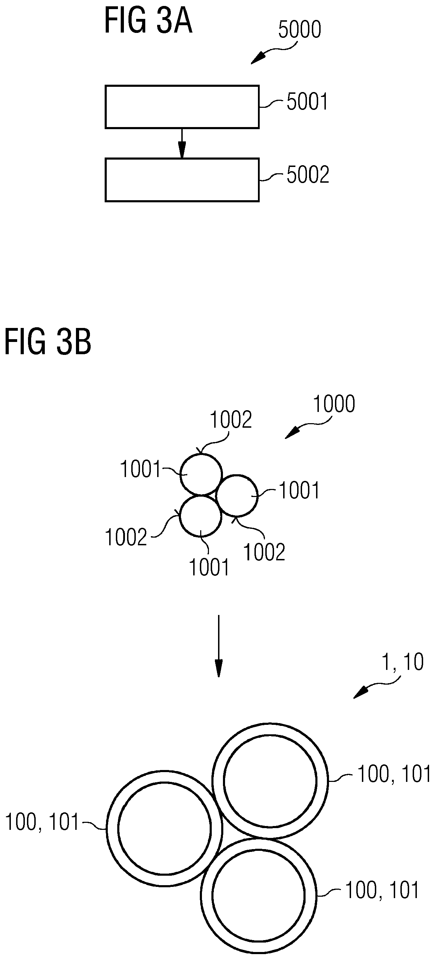

Figur 3A und 3B zeigen ein Verfahren zum Herstellen des Fluid-Filters

Figur 4 zeigt verschiedene Oxidations-Stufen von Mangan und deren Umwandlung ineinander.

Figuren 5A bis 5C zeigen mögliche Reaktionen an der Mikro-Kathode.

Figuren 6A und 6B zeigen mögliche Reaktionen an der Mikro-Anode.

Figur 7A zeigt die Strukturformel von Methionin.

Figur 7B zeigt die Strukturformel von Serin.

Figur 7C zeigt die Oxidation von Adenin (Nukleinbase in DNA u. RNA).

Gegeben ist ein Fluid-Filter 1 zum Hemmen einer Vermehrung von biologischem Material 3 eines Fluids 2, wobei das Fluid-Filter 1 eine Partikel-Schüttung 10 mit einer Vielzahl von Filter-Partikeln 100 aufweist und jeder der Filter-Partikel 100 derart ausgestaltet ist, dass er in Gegenwart von Feuchtigkeit eine galvanische Mikro-Zelle 101 mit Mikro-Anode 1011 und mit Mikro-Kathode 1013 bildet.

Jeder der Filter-Partikel 100 weist einen Schicht-Aufbau 102 mit einer Partikel-Schicht 103 und mindestens einer weiteren Partikel-Schicht 104 auf. Die Partikel-Schichten 103 und 104 bilden die Mikro-Anode 1011 oder die Mikro-Kathode 1014 der galvanischen Mikro-Zelle 101.

Zumindest eine der Partikel-Schichten 103 und 104 weist eine aus dem Bereich von 1 $\mu$m bis 10 $\mu$m und insbesondere aus dem Bereich von 2 $\mu$m bis 5 $\mu$m ausgewählte Schicht-Dicke 105 auf.

Zudem weist das Fluid-Filter 1 einen Indikator 2000 zur Anzeige einer Aktivität des Fluid-Filters 1 für das Hemmen des biologischen Materials 3 auf.

Zum Herstellen des Fluid-Filters 1 wird wie folgt vorgegangen:

a) Bereitstellen 5001 einer Ausgangs-Partikel-Schüttung 1000 mit Vielzahl von Ausgangs-Partikeln 1001 der Filter-Partikel 100 und

b) Umwandeln 5002 der Ausgangs-Partikel 1001 in die Filter-Partikel 100, wobei jeder der Filter-Partikel 100 derart ausgestaltet wird, dass er in Gegenwart von Feuchtigkeit 4 eine galvanische Mikro-Zelle 101 mit Mikro-Anode 1011 und mit Mikro-Kathode 1013 bildet.

Ausführungsbeispiel 1:
Die galvanische Mikro-Zelle wird von unterschiedlichen Metall-Oxiden gebildet. Dazu wird eines der Metall-Oxide auf das andere Metall-Oxid nass-chemisch durch Fällungsreaktionen aus entsprechenden Elektrolyten abgeschieden.

Eines der Metall-Oxide bildet die Ausgangs-Partikel-Schüttung 1000 mit Ausgangs-Partikel 1001. Die Ausgangs-Partikel 1000 bilden die Partikel-Schicht 103 mit Ausgangs-Partikel-Oberfläche 1002, auf der zur Bildung der galvanischen Mikro-Zellen die weitere Partikel-Schicht 104 aufgetragen wird.

Gemäß einer ersten Ausführungsform werden die Ausgangs-Partikel aus Ceroxid gebildet. Die Ceroxid Partikel werden aus einer niedrig molaren (0,1 bis 0,5 Mol/Liter) Cer (III)-Nitratlösung mit einem basischen Elektrolyten, wie 1 M Kaliumhydroxidlösung, 1 M Natriumhydroxidlösung oder Ammoniak bei pH 13, als Ce(OH)$_3$ gefällt. Dabei wird Cer (III)- Nitrat- Lösung vorgelegt und der basische Elektrolyt wird über eine Bürette langsam unter Rühren der vorgelegten Lösung zugetropft. Nach Zugabe des basischen Elektrolyten wird der gesamte Ansatz noch 2 bis 4 Stunden gerührt. Anschließend wird der partikuläre Niederschlag von der überstehenden Lösung über ein Membranfilter mit Hilfe einer Wasserstrahlpumpe abfiltriert. Anschließend wird das abfiltrierte $Ce(OH)_3$ bei 110°c getrocknet und in $Ce_3O_3$ umgewandelt. Dazu folgende Gleichungen:

$$Ce(NO_3)_3 \ + \ 3 \ NH_4OH \ = \ Ce(OH)_3 \ + \ 3 \ NH_4NO_3$$

$$2 \ Ce(OH)_3 \ + \ Heizung \ = \ Ce_2O_3 \ + \ 3 \ H_2O$$

Darauf wird Mangandioxid abgeschieden: Mangandioxid wird aus einer niedrig molaren (0,01 bis 0,05 Mol/ Liter) Kaliumpermanganat- Lösung und einer niedrig molaren (0,015 bis 0,075 Mol/ Liter) Mangan (II)- Nitrat- Lösung bei pH 8 bis 9 gebildet.

Zur Beschichtung werden die Ceroxid- Partikel in Wasser mittels Ultraschall suspendiert. Zu dieser Suspension wird die Mangan(II)-Nitrat-Lösung gegeben und der gesamte Ansatz auf pH 8 eingestellt entweder durch Zugabe von Ammoniak oder durch Zugabe einer basisch wirkenden Aminosäure wie L-Lysin. Andere basische Aminosäuren wie L-Histidin oder L- Arginin können ebenfalls verwendet werden.

Anschließend wird zu diesem Ansatz über eine Bürette tropfweise Kaliumpermanganat-Lösung unter Rühren des Ansatzes zugeführt. Nach Zugabe der Kaliumpermanganat-Lösung wird der gesamte Ansatz noch 2 bis 4 Stunden gerührt.

Über eine Komproportionierung wird aus $Mn^{+7}$ und $Mn^{+2}$ Braunstein hergestellt.:

$$3 \ Mn(NO_3)_2 \ + \ 2 \ KMnO_4 \ + \ 4 \ NH_4OH \ = \ 5 \ MnO_2 \ + \ 2 \ KNO_3 \ + \ 4 \ NH_4NO_3$$

Bei der Reaktion wird das Mangan(II)-Salz vom Kaliumpermanganat zu Mangan(IV)-Oxid oxidiert und das Kaliumpermanganat wird vom Mangan(II)-Salz zu Mangan(IV)- Oxid reduziert. Mangan(IV)-Oxid stammt sowohl aus dem Reduktionsmittel (Mangan(II)-Nitrat) als auch aus dem Oxidationsmittel ($KMnO_4$). Mangandioxid ist in wässrigen und basischen Lösungen unlöslich und schlägt sich als Präzipitat auf die Ceroxid-Oberfläche nieder. Anschließend werden die beschichteten Ceroxid-Partikel über ein Membranfilter mittels Wasserstrahlpumpe abfiltriert. Danach werden die abfiltrierten Mangan/ Ceroxid- Teilchen 24 Stunden bei 110°C unter Luftsauerstoff in einem Ofen getrocknet.

Gemäß einem alternativen Ausführungsbeispiel wird Ceroxid auf Ausgangs-Partikeln mit Mangandioxid abgeschieden.

Ausführungsbeispiel 2:

Die galvanische Mikro-Zelle wird von einem Metall und von einem Metall-Oxid gebildet. Hier wird das Metall-Oxid nasschemisch auf Metall-Partikel abgeschieden. Gemäß einer Ausführungsform bilden Silber-Partikel die Ausgangs-Partikel, auf deren Oberflächen Mangandioxid nasschemisch abgeschieden wird. Dazu wird wie folgt vorgegangen:

Silberteilchen werden aus einer niedrig konzentrierten (5g/ Liter bis 25g/ Liter) Silbernitrat-Lösung und Glucose- Ascorbinsäure-Lösung gebildet. Dabei wird das Silbernitrat durch die Glukose und die Ascorbinsäure zu Silber reduziert und fällt als elementares Silber aus:

$$AgNO_3 \ + \ 2 \ NH_3 \ = \ [Ag(NH_3)_2]NO_3$$

$$4 \ [Ag(NH_3)_2]NO_3 \ + \ C_5H_{11}O_5CHO \ + \ C_6H_8O_6 \ + \ H_2O \ = \ 4 \ Ag \ + \ C_5H_{11}O_5COOH \ +$$
$$C_6H_6O_6 \ + \ 4 \ HNO_3 \ + \ 8 \ NH_3$$

Die Glucose - Ascorbinsäure- Lösung wird vorgelegt und eine ammoniakalische Silbernitrat-Lösung wird über eine Bürette langsam unter Rühren der vorgelegten Lösung zugetropft. Nach Zugabe der Silbernitrat-Lösung wird der gesamte Ansatz noch 2 bis 4 Stunden gerührt. Anschließend wird das partikuläre Silber von der überstehenden Lösung über ein Membranfilter mit Hilfe einer Wasserstrahlpumpe abfiltriert. Danach werden die abfiltrierten Silberteilchen bei 110°c getrocknet.

Alternativ wird von Mangandioxid-Partikeln ausgegangen, auf die elementares Silber abgeschieden wird.

Die Beschichtung der Silber-Teilchen mit Mangandioxid erfolgt genauso wie die zuvor beschriebene Beschichtung der Ceroxid-Teilchen mit Mangandioxid. Anstelle der Ceroxid-Teilchen werden die Silber- Teilchen allerdings mittels Ultraschall in Wasser suspendiert und dann der Mangan(II)-Nitrat-Lösung zugeführt.

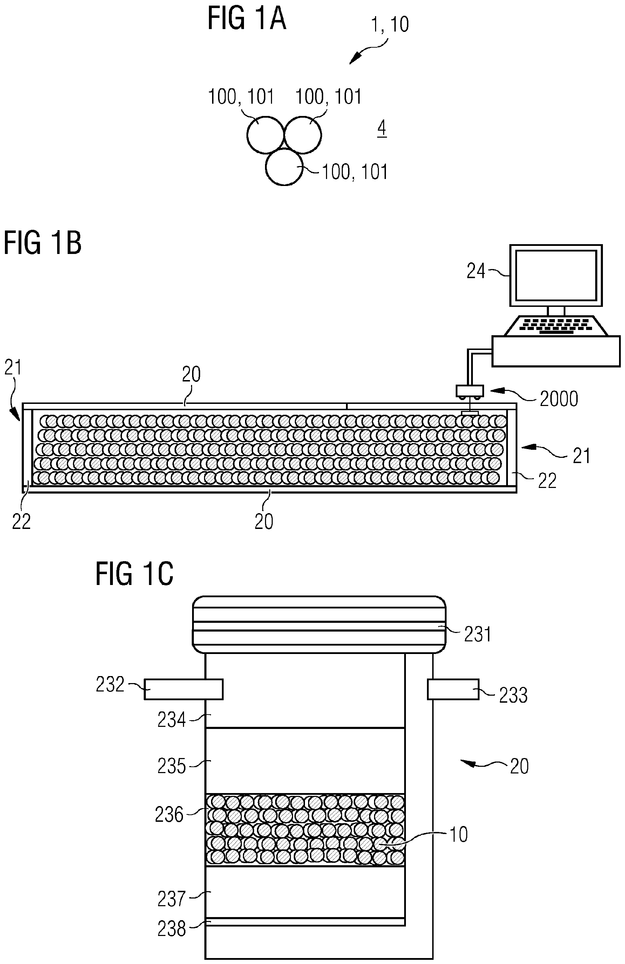

Die nasschemisch funktionalisierten Filterpartikel werden als antimikrobielle und viruzide Partikel-Schüttungen zur Entkeimung von Luft angewandt (Figur 1B).

In einem Gebrauchs-Gegenstand in Form eines rohrförmigen Behälters (Rohr) 20 werden die antimikrobiellen Partikel geschichtet. Die Enden 21 des Rohres 20 sind mit einer Membran 22 verschlossen, so dass die Filter-Partikel nicht herausfallen können.

Eine Porengröße der Membran wird so gewählt, dass die Filter-Partikel der Partikel-Schüttung das Rohr nicht verlassen können, aber die Partikel-Schüttung von Luft durchflossen werden kann. Diese Membranen können aus Nylon (autoklavierbar), Polyethersulfon, PTFE oder Cellulosemischester bestehen. Anstelle der Membranen können auch poröse Monolithe aus Siliziumcarbid oder ein 3D- gedruckter Monolith aus ABS (Acrylnitril- Butadien- Styrol- Copolymer) als Verschluss verwendet werden.

An der einen Seite des Rohres wird die mit Keimen belastete Luft in das Rohr mit der antimikrobiell und viruzid wirkenden Partikel-Schüttung unter Druck über Ventilatoren, die mit Hilfe von Pumpen betrieben werden und Luft ansaugen, eingeblasen. Ist in der Luft biologisches Material (Keime, Bakterien, Pilze, Viren oder Legionellen) vorhanden, so wird dieses biologische Material durch die Partikel-Schüttung abgetötet. Am Ende des Rohres kommt keimfreie Luft heraus. Um die Keimfreiheit der Luft zu kontrollieren, befindet sich am Ende des Rohres ein Inspektionssystem.

Das Inspektionssystem besteht aus einem Indikator 2000, der die Aktivität der antimikrobiell wirkenden Partikel-Schüttung anzeigt. Die Aktivität der Partikel-Schüttung wird durch die Keime in der Luft ausgelöst. Wenn die Teilchen in der Partikel-Schüttung von Keimen berührt werden, wirken die Teilchen wie mikrogalvanische Elemente, die mikroelektrische Felder erzeugen. Ceroxid und Manganoxid oder Silberoxid und Manganoxid verhalten sich wie Elektroden und an diesen Elektroden werden aus dem in der Luftfeuchtigkeit gelöstem Sauerstoff katalytisch reaktive Sauerstoffspezien (zum Beispiel Hyperoxid) gebildet. Diese reaktiven Sauerstoffspezien töten die Keime, in dem die Zellwand der Keime, sowie ihre RNA oder DNA angegriffen wird. Die katalytisch reaktiven Sauerstoffspezien können auch mit dem Indikator eine Redoxreaktion eingehen, wobei sich eine Indikatorfarbe des Indikators ändert. Bei den Indikatoren handelt es sich um organische Farbstoffe, deren chemisches Grundgerüst konjugierte Doppelbindungen ($\pi$- Elektronen) enthalten. Die Sauerstoffspezien reagieren mit den $\pi$-Elektronen und der Indikator ändert seine Farbe. Diese Farbveränderung kann ein Vision- Sensor durch eine integrierte Beleuchtung und ein integriertes Objektiv aufnehmen. Zur Aufnahme der Bilder ist das Rohrende auf der Seite des Vision-Sensor transparent ausgestaltet. Die Bilder werden an einem Rechner 24 weitergeleitet und dann über einen Bildverarbeitungsprozessor mit Hilfe von Algorithmen ausgewertet. Stimmen die Pixel, die Grauwerte und der Kontrast des aufgenommenen Bildes mit dem ursprünglichen Indikatorbild überein, kommt im hinteren Teil der Partikel-Schüttung entkeimte Luft heraus. Zeigen diese Bilder Unterschiede, dann ist die Luft mit Keimen belastet. Der Sensor löst sofort eine Stilllegung der Lüftungsanlage aus, damit die mit Keimen belastete Luft nicht mehr verbreitet werden kann. Solch ein Ablauf ist besonders in großen Gebäudekomplexen erforderlich, in denen sich hunderte von Menschen aufhalten und mit infektionsauslösenden Keimen in Berührung kommen können (z.B. Kliniken, Lebensmittelindustrie, große Mietkomplexe).

Gemäß einem weiteren Anwendungs-Beispiel werden die nasschemisch funktionalisierten Filterpartikel als antimikrobielle und viruzide Partikel-Schüttung zur Entkeimung von Wasser angewandt (Figur 1C). Es findet eine Reinigung des Wassers mit Hilfe einer Kartusche 23 statt.

Aktivkohle 234 filtert Schwermetalle wie Blei, Quecksilber und Kupfer heraus. Das Harz 235, sofern das Harz als Ionenaustauscher (künstliche Harze aus Polyacryl- oder Polystyrol-Gerüste mit für den Ionenaustauch geeigneten funktionellen Gruppen) aufgebaut ist, enthärtet einerseits das Wasser durch Austausch von $Ca^{2+}$- Ionen gegen $Na^+$-Ionen und nicht gesunde Anionen wie Nitrate gegen Chlorid- oder Hydroxyl-Ionen. Als nächste Schicht 236 wird ein erfindungsgemäßer Fluid-Filter mit Partikel-Schüttung aus antimikrobiell wirkenden Teilchen, eingesetzt werden, um die Keime, wie Bakterien, Legionellen, Pilze, Algen und Viren, zu töten und abzutöten bzw. zu entfernen. Eine Schicht 237 mit Hydroxylapatit ($Ca_5[OH](PO_4)_3$) und Magnesiumcarbonat dient dazu, dem gereinigten Wasser als Trinkwasser einen Geschmack durch Zugabe von Kalzium und Magnesium zu geben.

Das Wasser gelangt unter Leitungsdruck (2 bis 8 bar, Vorsorgedruck) über en Wasser-Einlass 232 in die Kartusche und durchläuft die einzelnen Reinigungsstationen bis zum Kartuschen- Boden. Am Kartuschen- Boden wird das Wasser seitlich durch den Druck nach oben gedrückt und verlässt als keimfreies Wasser die Kartusche über den Wasser-Auslass 233. Eine halbdurchlässige Membran 238 hält die Partikel-Schüttungen vor dem Verlassen des Behältnisses zurück und lässt nur das Wasser durch. Oben hat die Kartusche eine Verschluss-Klappe 231 mit einer Verschraubung, so dass sie in jeden Wassertank und Rohrleitungs- System eingebaut werden kann.

Beschreibung der Funktionsweise:

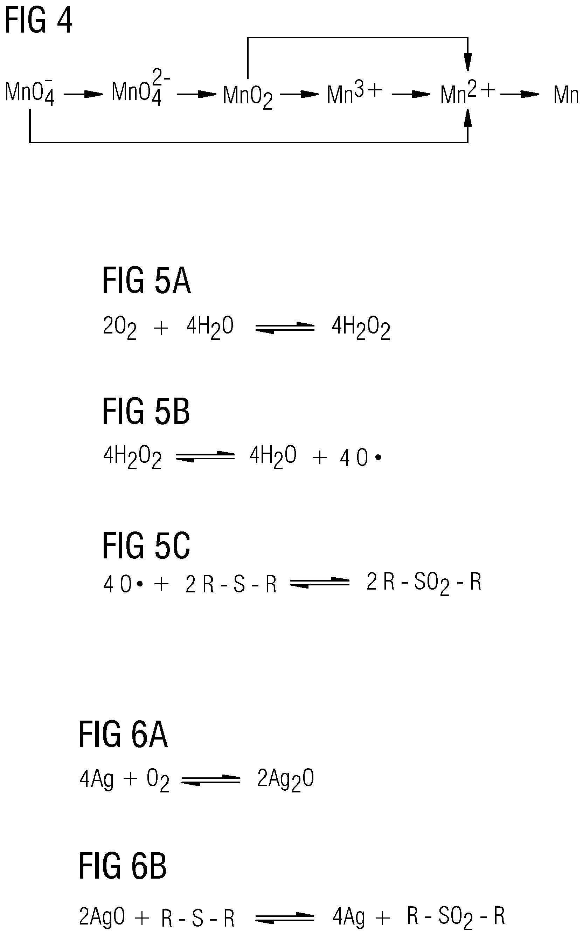

Da Ceroxid nach dem elektrochemischen Standardpotential mit 1,44 V edler als Mangandioxid (Braunstein) ist (vgl. Figuren 4A und 4B), bildet sich zwischen dem Ceroxid und dem Braunstein in Gegenwart von Feuchtigkeit ein elektrisches Feld aus. Damit können an dem Ceroxid und dem Braunstein Redoxprozesse ablaufen und durch die dabei stattfindenden Elektronenübergänge Mikroben abgetötet werden. Für die Kombination von Braunstein und Silber gilt der gleiche Sachverhalt (vgl. Figur 4B und Figur 4c).

An der Mikro-Anode (Braunstein) wird bei Kontakt mit der geladenen Mikroben- Hülle ein katalytisch unterstützter Redoxprozess ausgelöst. Auch in diesem Fall werden die Mikroorganismen oxidativ zerstört. Die Mikro-Anode kehrt wieder in ihren Ausgangszustand zurück.

Zum Beispiel kann der Schwefel in einer schwefelhaltigen proteinogenen Aminosäure zu einem Sulfoxid oder die Hydroxylgruppe in der Seitenkette einer proteinogenen Aminosäure zu einer Aldehyd- oder Carboxylgruppe oxidiert werden. Eine derart chemisch veränderte Aminosäure kann nicht mehr am Aufbau lebensnotwendiger Proteine teilnehmen. Folglich stirbt und der Mikroorganismus.

Nukleinbasen, die in den Nukleinsäuren DNA und RNA enthalten und für die genetische Information verantwortlich sind, bestehen aus einem Grundgerüst heterocyclischer aromatischer Amine (Purine und Pyrimidine) mit Doppelbindungen. Radikale, wie Superoxid (Hyperoxid) oder Hydroxylradikale) mit einzelnen ungepaarten Elektronen in der äußeren Elektronenhülle greifen die Doppelbindungen an, in dem sie mit den $\pi$- Elektronen ihre äußere Elektronenhülle auffüllen, um die Edelgaskonfiguration zu erreichen. Damit geht ein Verlust des Doppelbindungssystem im Ring einher und die Nukleinbasen können ihre Information zur Proteinbiosynthese nicht mehr weitergeben und die Replikation der Nukleinsäuren DNA und RNA wird unterbrochen. Auch hier stirbt der Mikroorganismus ab.

An der Mikro-Anode 1011 wird bei Kontakt mit einer geladenen Hülle des Mirko-Organismus ein katalytisch unterstützter Redox-Prozess ausgelöst. Auch in diesem Fall werden die Mikroorganismen oxidativ zerstört. Die Mikro-Anode kehrt dann wieder in ihren Ausgangszustand zurück.

An der Mikro-Kathode 1013 finden Reaktionen gemäß Figuren 5A, 5B und 5C statt. An der Mikro-Anode treten die Reaktionen gemäß Figuren 6A und 6B auf.

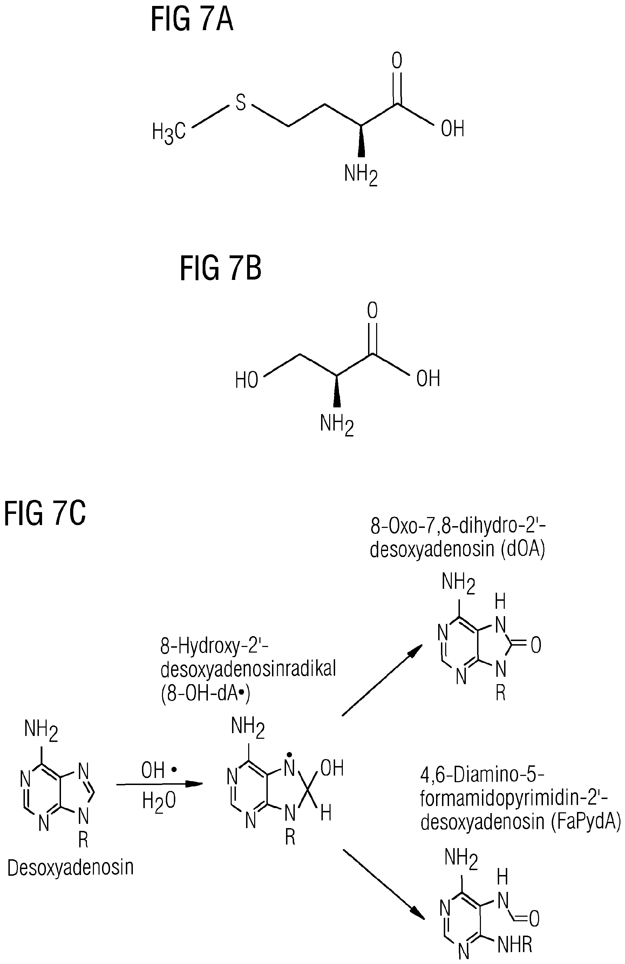

Die Figuren 7A und 7B (Methionin und Serin) sind Beispiele für proteinogene Aminosäuren, deren funktionelle Gruppen mit Hilfe der Erfindung oxidativ verändert werden können.

Figur 7C zeigt anhand der Oxidation von Adenin (Nukleinbase in DNA u. RNA) grundlegende Reaktionen, die mit Hilfe der Erfindung in Molekülen eines Mikroorganismus ausgelöst werden, sodass eine Vermehrung des Mikroorganismus und damit eine Anreicherung von vermehrten Mikroorganismen nicht möglich ist.

**Patentansprüche**

1. Fluid-Filter (1) zum Hemmen einer Vermehrung von biologischem Material (3) eines Fluids (2), wobei

    - das Fluid-Filter (1) eine Partikel-Schüttung (10) mit einer Vielzahl von Filter-Partikeln (100) aufweist und
    - jeder der Filter-Partikel (100) derart ausgestaltet ist, dass er in Gegenwart von Feuchtigkeit eine galvanische Mikro-Zelle (101) mit Mikro-Anode (1011) und mit Mikro-Kathode (1013) bildet.

2. Fluid-Filter (1) nach Anspruch 1, wobei

    - jeder der Filter-Partikel (100) einen Schicht-Aufbau (102) mit einer Partikel-Schicht (103) und mindestens einer weiteren Partikel-Schicht (104) aufweist und
    - die Partikel-Schichten (103, 104) die Mikro-Anode (1011) oder die Mikro-Kathode (1014) der galvanischen Mikro-Zelle (101) bilden.

3. Fluid-Filter (1) nach Anspruch 2, wobei

    - die Mikro-Anode (1011) ein Anoden-Material (1012) mit einem Redoxpotential von über + 0,5 V und
    - die Mikro-Kathode (1013) ein Kathoden-Material (1014) mit einem Redoxpotential von unter - 0,5 V aufweisen.

4. Fluid-Filter (1) nach Anspruch 3, wobei das Anoden-Material (1012) und/oder das Kathoden-Material (1014) mindestens ein elementares Metall und/oder eine Metall-Verbindung aufweisen.

5. Fluid-Filter (1) nach Anspruch 4, wobei das elementare Metall Silber aufweist.

6. Fluid-Filter (1) nach Anspruch 4 oder 5, wobei die Metall-Verbindung mindestens ein Übergangsmetall aufweist.

7. Fluid-Filter (1) nach Anspruch 6, wobei das Übergangsmetall zumindest aus der Gruppe Cer und Mangan ausgewählt ist.

8. Fluid-Filter (1) nach einem der Ansprüche 2 bis 7, wobei zumindest eine der Partikel-Schichten (103, 104) eine aus dem Bereich von 1 μm bis 10 μm und insbesondere aus dem Bereich von 2 μm bis 5 μm ausgewählte Schicht-

Dicke (105) aufweist.

9. Fluid-Filter (1) nach einem der Ansprüche 1 bis 8, wobei mindestens ein Indikator (2000) zur Anzeige einer Aktivität des Fluid-Filters (1) für das Hemmen des biologischen Materials (3) vorhanden ist.

10. Verfahren zum Herstellen eines Fluid-Filters (1) nach einem der Ansprüche 1 bis 9 mit folgenden Herstellungs-Schritten:

a) Bereitstellen (5001) einer Ausgangs-Partikel-Schüttung (1000) mit Vielzahl von Ausgangs-Partikeln (1001) der Filter-Partikel (100) und
b) Umwandeln (5002) der Ausgangs-Partikel (1001) in die Filter-Partikel (100), wobei jeder der Filter-Partikel (100) derart ausgestaltet wird, dass er in Gegenwart von Feuchtigkeit (4) eine galvanische Mikro-Zelle (101) mit Mikro-Anode (1011) und mit Mikro-Kathode (1013) bildet.

11. Verfahren nach Anspruch 10, wobei Ausgangs-Partikel (1001) mit jeweils einer Ausgangs-Partikel-Oberfläche (1002) verwendet werden und zum Umwandeln der Ausgangs-Partikel (1001) in die Filter-Partikel (100) ein Anordnen des Anoden-Materials (1012) oder des Kathoden-Materials (1014) auf der Ausgangs-Partikel-Oberfläche (1002) durchgeführt, so dass der Schicht-Aufbau (102) entsteht.

12. Verfahren nach Anspruch 11, wobei zum Anordnen des Anoden-Materials (1012) oder zum Anordnen den Kathoden-Materials (1014) ein nass-chemische Abscheiden durchgeführt wird.

13. Verwendung des Fluid-Filters (1) nach einem der Ansprüche 1 bis 9 zum Hemmen der Vermehrung von biologischem Material (3) eines Fluids (2), wobei das Fluid-Filter (1) und das Fluid (2) in Kontakt gebracht werden und durch die in Gegenwart von Feuchtigkeit (4) gebildeten Mikro-Zellen (101) des Fluid-Filters (1) die Vermehrung des biologischen Materials (3) gehemmt wird.

14. Verwendung nach Anspruch 13, wobei als Fluid (2) zumindest aus der Gruppe Luft und/oder Wasser ausgewählt wird.

15. Verwendung nach Anspruch 13 oder 14, wobei das Fluid (2) Bestandteil zumindest eines aus der Gruppe Lüftungs-Anlage und Klima-Anlage ausgewählten Gebrauchs-Gegenstands (20) ist.

16. Computer-Programm-Produkt zur Simulation des Fluid-Filters (1) zum Hemmen einer Vermehrung von biologischem Material (3) eines Fluids (2) nach einem der Ansprüche 1 bis 9.

# FIG 1A

# FIG 1B

# FIG 1C

## FIG 2A

100, 101, 102

3

4

104, 1011, 1012

103, 1013, 1014

## FIG 2B

103, 104

105

# FIG 3A

5000

5001

5002

# FIG 3B

1000

1002

1001

1002

1001

1001

1002

1, 10

100, 101

100, 101

100, 101

## FIG 4

$$MnO_4^- \longrightarrow MnO_4^{2-} \longrightarrow MnO_2 \longrightarrow Mn^{3+} \longrightarrow Mn^{2+} \longrightarrow Mn$$

## FIG 5A

$$2O_2 + 4H_2O \rightleftharpoons 4H_2O_2$$

## FIG 5B

$$4H_2O_2 \rightleftharpoons 4H_2O + 4O\cdot$$

## FIG 5C

$$4O\cdot + 2R-S-R \rightleftharpoons 2R-SO_2-R$$

## FIG 6A

$$4Ag + O_2 \rightleftharpoons 2Ag_2O$$

## FIG 6B

$$2AgO + R-S-R \rightleftharpoons 4Ag + R-SO_2-R$$

## FIG 7A

## FIG 7B

## FIG 7C

8-Oxo-7,8-dihydro-2'-desoxyadenosin (dOA)

8-Hydroxy-2'-desoxyadenosinradikal (8-OH-dA•)

Desoxyadenosin

4,6-Diamino-5-formamidopyrimidin-2'-desoxyadenosin (FaPydA)

Europäisches
Patentamt
European
Patent Office
Office européen
des brevets

# EUROPÄISCHER RECHERCHENBERICHT

**Nummer der Anmeldung**

EP 23 17 2872

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/226494 A1 (JENSEN JENS DAHL [DE] ET AL) 18. September 2008 (2008-09-18) | 1,2,4-6, 8-16 | INV. B01D39/06 |
| Y | * Absätze [0002], [0022], [0026] – [0027], [0038]; Ansprüche 1, 4-5; Abbildungen 1-2 * | 3,7 | B01D39/16 B01D39/18 B01D39/20 B01D29/00 |
| Y | US 2006/003019 A1 (MOLLER PER [DK] ET AL) 5. Januar 2006 (2006-01-05) * Absätze [0036], [0060] * | 3,7 | B01D46/00 B01D53/84 C02F1/461 |

-----

-----

**RECHERCHIERTE SACHGEBIETE (IPC)**

B01D
C02F

Der vorliegende Recherchenbericht wurde für alle Patentansprüche erstellt

| Recherchenort | Abschlußdatum der Recherche | Prüfer |
|---|---|---|
| Den Haag | 13. Oktober 2023 | Artos Fernández, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 2872

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2023

| Im Recherchenbericht angeführtes Patentdokument | Datum der Veröffentlichung | Mitglied(er) der Patentfamilie | Datum der Veröffentlichung |
|---|---|---|---|
| US 2008226494 A1 | 18-09-2008 | DE 102005037849 A1 | 08-02-2007 |
| | | EP 1919522 A1 | 14-05-2008 |
| | | US 2008226494 A1 | 18-09-2008 |
| | | WO 2007017354 A1 | 15-02-2007 |
| US 2006003019 A1 | 05-01-2006 | AT E386502 T1 | 15-03-2008 |
| | | AU 2003281971 A1 | 15-06-2004 |
| | | CA 2506591 A1 | 03-06-2004 |
| | | DE 60319272 T2 | 05-03-2009 |
| | | DK 1575550 T3 | 16-06-2008 |
| | | EP 1575550 A1 | 21-09-2005 |
| | | NO 330629 B1 | 30-05-2011 |
| | | NZ 539925 A | 30-11-2007 |
| | | US 2006003019 A1 | 05-01-2006 |
| | | WO 2004045577 A1 | 03-06-2004 |

EPO FORM P0461

Für nähere Einzelheiten zu diesem Anhang : siehe Amtsblatt des Europäischen Patentamts, Nr.12/82